# EUROPEAN PATENT APPLICATION

(11) **EP 4 434 619 A1**
(43) Date of publication of application: **25.09.2024**
(21) Application number: 21964570.2
(22) Date of filing: 07.12.2021
(51) Int. Cl.: B01J 23/04, B01J 35/10, C01G 23/047

(54) **CATALYST FOR CATALYTIC DEGRADATION OF ETHYLENE, PREPARATION METHOD THEREFOR AND USE THEREOF**

(30) Priority: 16.11.2021 CN 202111356393
(71) Applicant: China Energy Investment Corporation Limited, Beijing 100011 (CN); National Institute of Clean-and-Low-Carbon Energy, Beijing 102209 (CN)
(72) Inventor: LI, Ge, Beijing 102209 (CN); WANG, Baodong, Beijing 102209 (CN); MA, Ziran, Beijing 102209 (CN); MA, Jing, Beijing 102209 (CN); PENG, Shengpan, Beijing 102209 (CN); WANG, Hongyan, Beijing 102209 (CN)
(74) Representative: Ström & Gulliksson AB
(86) International application number: PCT/CN2021/136019
(87) International publication number: WO 2023/087425

(57) **Abstract**

Provided are a catalyst for catalytic degradation of ethylene, a preparation method therefor and a use thereof, relating to the technical field of catalytic degradation of ethylene. The catalyst comprises: TiO₂ in crystalline form and an auxiliary agent; the crystalline form of TiO₂ is anatase type, the surface of the TiO₂ in crystalline form is covered with a TiO₂ disordered layer, and the disordered layer contains surface hydroxyl groups. When the temperature reaches 300-450°C, the ethylene degradation efficiency of the catalyst for catalytic degradation of ethylene can reach 50% or above, and a maximum of 90%; compared with existing catalysts, no transition metal or precious metal is used as an active ingredient.

## Description

### CROSS-REFERENCES TO RELATED APPLICATIONS

The application claims priority to Chinese Application No. 202111356393.6, filed on November 16, 2021, entitled "Catalyst for catalytic degradation of ethylene, preparation method therefor and use thereof, which is herein incorporated by reference.

### TECHNICAL FIELD

The present disclosure relates to the technical field of catalytic degradation of ethylene, and in particular to a catalyst for catalytic degradation of ethylene, preparation method therefor and use thereof.

### BACKGROUND

Volatile Organic Compounds (hereinafter referred to as VOCs) are important precursors for the formation of PM_{2.5} and O₃. In order to further improve air quality, the comprehensive governance of the coal chemical industry and other key industries, which are related with emission of VOCs, should be enhanced. The current technologies for treatment of VOCs are mainly divided into three categories, namely adsorption recovery technology, combustion technology, and adsorption concentration + combustion technology, wherein the combustion technology is used for treatment of VOCs lacking a recovery value. For example, volatile organic compounds from the coal chemical industry are mainly derived from coal gasification process, and the process of washing tail gas with low temperature methanol; the VOCs have the characteristics such as a wide variety, low recovery value, and high air volume. The combustion technology can oxidize VOCs to harmless emissions of CO₂ and H₂O.

Catalytic combustion is one of the key means in the combustion technology, wherein the key points of catalytic combustion technology include the design and preparation of catalysts for oxidation of VOCs. The catalysts for oxidation of VOCs are typically composed of two parts, namely a carrier and an active ingredient (noble metal). Ethylene is a common VOC gas of the coal chemical industry, the commercially available catalysts for the oxidation of ethylene are mainly Pt/γ-Al₂O₃ catalysts. However, the active ingredient noble metal is expensive and requires a long supply cycle, and is essentially dependent on imports from foreign countries. In addition, the commercially available Pt/γ-Al₂O₃ catalysts suffer from the defects such as undesired thermal stability, poor resistance to catalyst poisoning.

To sum up, it is imperative to develop a novel, low cost, anti-poisoning, stable and environmentally friendly catalyst that can effectively reduce the atmospheric pollutants VOCs.

### SUMMARY

An object of the present disclosure is to overcome the problem in the prior art that the catalyst for catalytic degradation of ethylene requires a noble metal as an active ingredient, and the present disclosure provides a catalyst for catalytic degradation of ethylene, preparation method therefor and use thereof, wherein the catalyst for catalytic degradation of ethylene can achieve a high catalytic activity for ethylene.

The inventors of the present disclosure have discovered during the course of research that, when the composition of a catalyst for catalytic degradation of ethylene comprises K₂O and Na₂O, and TiO₂ in crystalline form of anatase type, and the surface of TiO₂ in crystalline form is covered with a TiO₂ disordered layer containing surface hydroxyl groups and Ti³⁺, the catalyst can effectively degrade ethylene into CO₂ and H₂O, without using a noble metal contained in the catalyst as an active ingredient, thus obtaining the present disclosure.

In order to achieve the above object, a first aspect of the present disclosure provides a catalyst for catalytic degradation of ethylene, wherein the catalyst comprises TiO₂ in crystalline form and an auxiliary agent; wherein the crystalline form of TiO₂ is anatase type, and the surface of the TiO₂ in crystalline form is covered with a TiO₂ disordered layer containing surface hydroxyl groups.

In a second aspect, the present disclosure provides a preparation method of a catalyst for catalytic degradation of ethylene, comprising the following steps:
(1) mixing a titanium source powder with an acid, and roasting an obtained mixture;
(2) subjecting a product obtained from the roasting to water leaching, and subsequently to a solid-liquid separation to obtain a Ti-containing filtrate;
(3) subjecting the filtrate to hydrolysis and aging to obtain a metatitanic acid colloid comprising auxiliary agent elements which contain Na and K;
(4) subjecting the metatitanic acid colloid to water washing, drying and calcination, to obtain a nano-TiO₂ powder; and
(5) subjecting the nano-TiO₂ powder to hydrogenation to obtain the catalyst for catalytic degradation of ethylene;
wherein the titanium source powder is selected from spent SCR denitration catalyst containing Na₂O and K₂O.

In a third aspect, the present disclosure provides a catalyst for catalytic degradation of ethylene prepared with the method mentioned above.

In a fourth aspect, the present disclosure provides a use of the catalyst for catalytic degradation of ethylene mentioned above in the degradation of ethylene.

Through the technical solutions mentioned above, the present disclosure has the beneficial effects as follows:
(1) The preparation method of the catalyst for catalytic degradation of ethylene according to the present disclosure uses spent SCR catalyst containing Na₂O and K₂O auxiliary agent as raw materials, can properly utilize the elements contained in the obtained anatase type TiO₂ prepared with the sulfuric acid method, so as to provide the acidic site for hydrogenation of TiO₂. In addition, the structural defect of the prepared TiO₂ in crystalline form can properly regulate oxidation-reduction properties thereof.
(2) The catalyst for catalytic degradation of ethylene according to the present disclosure does not require a use of transition metal or noble metal as active ingredient, thereby eliminating the need to deal with problems of catalyst poisoning and aging during the process of catalytic degradation of ethylene, and the catalyst can be easily regenerated after deactivation.

### BRIEF DESCRIPTION OF THE DRAWINGS

FIG. 1 is a process flow diagram showing the preparation method of a catalyst for catalytic degradation of ethylene according to the present disclosure;
FIG. 2 shows a comparison of the appearance between the catalyst for catalytic degradation of ethylene prepared in Example 1 of the present disclosure and a TiO₂ powder;
FIG. 3 shows a comparison of the X-ray diffraction pattern between the catalyst for catalytic degradation of ethylene prepared in Example 1 of the present disclosure and a TiO₂ powder;
FIG. 4 is a comparison graph of nitrogen adsorption-desorption isotherms of the catalyst for catalytic degradation of ethylene prepared in Example 1 of the present disclosure;
FIG. 5 shows a comparison of the EPR between the catalyst for catalytic degradation of ethylene prepared in Example 1 of the present disclosure and pure nano-TiO₂;
FIG. 6 is a TEM image of the catalyst for catalytic degradation of ethylene prepared in Example 1 of the present disclosure; and
FIG. 7 shows the relationship between temperature and ethylene conversion rate for the catalyst for catalytic degradation of ethylene prepared in Example 1 of the present disclosure.

Description of symbols in the drawings: 1 refers to TiO₂ powder, and 2 refers to catalyst for catalytic degradation of ethylene.

### DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

A first aspect of the present disclosure provides a catalyst for catalytic degradation of ethylene, wherein the catalyst comprises TiO₂ in crystalline form and an auxiliary agent; wherein the crystalline form of TiO₂ is anatase type, and the surface of the TiO₂ in crystalline form is covered with a TiO₂ disordered layer containing surface hydroxyl groups.

The catalyst for catalytic degradation of ethylene provided by the present disclosure comprises TiO₂ in crystalline form having a specific structure and an auxiliary agent, but does not comprise a noble metal as an active ingredient, and can produce better effect of catalytic degradation of ethylene.

In some embodiments of the present disclosure, preferably, the catalyst comprises TiO₂ in an amount of 99.9-99.99 wt%, based on a total weight of the catalyst.

In some embodiments of the present disclosure, the catalyst further comprises an auxiliary agent, which can advantageously promote the technical effect of improving the catalytic degradation of ethylene. Preferably, the auxiliary agent comprises K₂O and Na₂O, the catalyst comprises K₂O in an amount of 0.002-0.006 wt% and Na₂O in an amount of 0.006-0.098 wt%, based on the total weight of the catalyst.

In some embodiments of the present disclosure, the catalyst may further comprise a pore structure that is favorable for catalytic degradation reaction of ethylene. Preferably, the catalyst has a specific surface area of 80-120 m²/g, a pore volume of 0.2-0.8 cm³/g, and a pore diameter of 8-13 nm.

In some embodiments of the present disclosure, preferably, the TiO₂ disordered layer has a thickness of 1.8-3 nm. The structural defects formed by the TiO₂ in crystalline form in the catalyst may form the TiO₂ disordered layer on the surface of the TiO₂ in crystalline form, and can contain surface hydroxyl groups.

In some embodiments of the present disclosure, preferably, in the TiO₂ disordered layer, Ti³⁺ accounts for 2.15%-10.37% of titanium element in molar percentage, more preferably 5.15%-8.66%. The TiO₂ in crystalline form of the present disclosure contains the above-mentioned defects and the amount of the defects is calculated based on Ti³⁺, and when the molar percentage falls in the above range, the catalyst can be controlled to more appropriately match the above-mentioned auxiliary agent, and exhibit better catalytic activity for degradation reaction of ethylene. The amount of Ti³⁺ can be determined by an X-ray photoelectron spectroscopy analysis method.

In the present disclosure, the surface hydroxyl group is a hydroxyl group attached to Ti³⁺, and may be represented as Ti-OH.

In the present disclosure, the catalyst for catalytic degradation of ethylene has an appearance of an earth yellow color and a morphology of spherical shape.

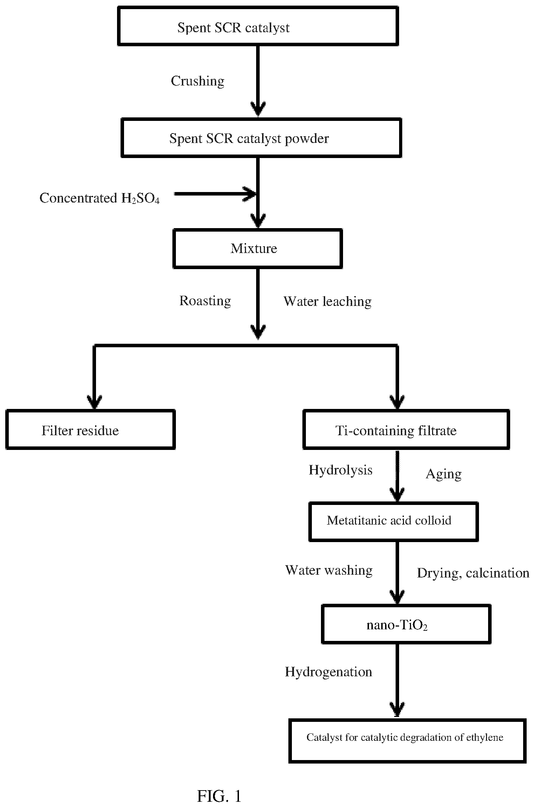

In a second aspect, the present disclosure provides a preparation method of a catalyst for catalytic degradation of ethylene, as shown in FIG. 1, wherein the method comprises the following steps:
(1) mixing a titanium source powder with an acid, and roasting an obtained mixture;
(2) subjecting a product obtained from the roasting to water leaching, and subsequently to a solid-liquid separation to obtain a Ti-containing filtrate;
(3) subjecting the filtrate to hydrolysis and aging to obtain a metatitanic acid colloid comprising auxiliary agent elements which contain Na and K;
(4) subjecting the metatitanic acid colloid to water washing, drying and calcination, to obtain a nano-TiO₂ powder; and
(5) subjecting the nano-TiO₂ powder to hydrogenation to obtain the catalyst for catalytic degradation of ethylene;
wherein the titanium source powder is selected from spent SCR denitration catalyst containing Na₂O and K₂O.

In some embodiments of the present disclosure, the steps (1) and (2) can be used to extract mainly Ti element and to obtain a soluble Ti-containing compound(s), and can extract Na and K elements as well. Preferably, the acid is concentrated sulfuric acid; preferably, the acid has a concentration of 85-92 wt%, more preferably 88-91 wt%. The requirement of extracting the beneficial elements, mainly Ti element, should be fulfilled.

In some embodiments of the present disclosure, preferably, conditions for mixing comprise a temperature of 20-30°C and a time of 2-6 h; more preferably, a temperature of 22-28°C and a time of 3-5 h.

In some embodiments of the present disclosure, preferably, a mass ratio of the titanium source powder to the acid is 1: (1.5-2). The titanium source powder may further comprise an auxiliary agent, preferably comprising Na₂O and K₂O, more preferably, the titanium source powder comprises K₂O in an amount of 0.1-0.3 wt% and Na₂O in an amount of 0.2-0.8 wt%, based on the total weight of the titanium source powder, which can ensure that the finally prepared catalyst for catalytic degradation of ethylene comprises the defined amount of Na₂O and K₂O, to further improve the catalytic activity for degradation of ethylene.

In some embodiments of the present disclosure, preferably, a roasting temperature is within a range of 150-300°C and a roasting time is 30-90 min.

In some embodiments of the present disclosure, preferably, the titanium source powder has an average particle size of 10-1,000 µm, preferably 50-200 µm. The above conditions can facilitate a more efficient extraction of Ti, Na and K elements to obtain a soluble Ti-containing compound(s).

In some embodiments of the present disclosure, the step (2) may achieve dissolution of the Ti element, and may also achieve dissolution of auxiliary agent elements such as Na and K. Preferably, conditions for water leaching comprise a temperature of 60-120°C and a time of 60-180 min; and more preferably, a temperature of 80-100°C and a time of 80-120 min.

In some embodiments of the present disclosure, preferably, a mass ratio of the product to water used in the water leaching is 1: (2-6), more preferably 1: (3-5).

In some embodiments of the present disclosure, the step (3) may be mainly used for precipitation of Ti. Preferably, a hydrolysis temperature is within a range of 80-110°C, more preferably 85-105°C; and a hydrolysis time is within a range of 2-5 h, more preferably 2.5-4 h.

In some embodiments of the present disclosure, the hydrolysis is followed by an aging treatment, preferably, an aging time is within a range of 15-30 h, more preferably 16-26 h, and an aging temperature is within a range of 10-50°C, more preferably 20-35°C.

In the present disclosure, the aged material is subjected to suction filtration and separation, and water washing, to obtain a metatitanic acid colloid containing auxiliary agent elements.

In some embodiments of the present disclosure, the step (4) is carried out to purify the metatitanic acid colloid, for example, the step may be used for removing impurities and removing water. The water washing process is used to remove impurities from the metatitanic acid colloid by a process comprising mixing the metatitanic acid colloid with water, stirring the mixture, filtering and removing the filtrate. Water washing and filtering may be performed for several times. Preferably, a drying temperature is within a range of 65-95°C and a drying time is 60-120 min.

In some embodiments of the present disclosure, preferably, a calcination temperature is within a range of 450-700°C, a calcination time is 2-8 h, and a temperature rise rate is 5-10°C/min. Preferably, the calcination is carried out for 5-6 h at a temperature of 500-600°C and a temperature rise rate of 5-7°C/min, and the effect is better.

In the present disclosure, the crystalline form of the nano-TiO₂ powder obtained after calcination is anatase type.

Preferably, the nano-TiO₂ powder further contains an auxiliary agent, such as Na₂O and K₂O, which are dispersed in the nano-TiO₂ powder.

In some embodiments of the present disclosure, the nano-TiO₂ powder is subjected to surface hydrogenation and reduction in the step (5), and defect structure is generated after the hydrogenation process. Preferably, conditions for hydrogenation comprise a hydrogenation temperature of 400-550°C, a hydrogenation temperature rise rate of 5-10°C/min, a hydrogenation time of 2-12 h, a hydrogen concentration of 90-100 vol%, and a hydrogen flow rate of 100-300 mL/min. The TiO₂ powder is heated from room temperature to the hydrogenation temperature at the hydrogenation temperature rise rate in the presence of hydrogen at a set flow rate, and the hydrogenation is then performed at constant temperature. Preferably, the hydrogenation is performed at 420-460°C under normal pressure for 4-12 h and a hydrogen flow rate of 100-150 mL/min in an atmosphere of 100 vol% H₂, and the effect is more desirable.

In a third aspect, the present disclosure provides a catalyst for catalytic degradation of ethylene prepared with the method mentioned above.

Preferably, the catalyst for catalytic degradation of ethylene prepared with the method mentioned above comprises TiO₂ in crystalline form and an auxiliary agent, wherein the catalyst comprises K₂O in an amount of 0.002-0.006 wt% and Na₂O in an amount of 0.006-0.098 wt%, based on a total weight of the catalyst. The crystalline form of TiO₂ is anatase type, the catalyst comprises TiO₂ in an amount of 99.9-99.99 wt%. The surface of TiO₂ in crystalline form is covered with a TiO₂ disordered layer. The TiO₂ disordered layer has a thickness of 1.8-3 nm; in the TiO₂ disordered layer, Ti³⁺ accounts for 2.15%-10.37% of titanium element in molar percentage, preferably 5.15%-8.66%. The catalyst has a specific surface area of 80-120 m²/g, a pore volume of 0.2-0.8 cm³/g, and a pore diameter of 8-13 nm.

In a fourth aspect, the present disclosure provides a use of the catalyst for catalytic degradation of ethylene mentioned above in the degradation of ethylene.

According to the present disclosure, specifically, the application comprises: performing a catalytic degradation reaction of ethylene by contacting an organic volatile gas containing ethylene with the catalyst for catalytic degradation of ethylene of the present disclosure.

According to the present disclosure, the application is implemented under a temperature condition, which may be within a range of 100-500°C.

According to the present disclosure, a volume concentration of ethylene in the organic volatile gas may be within a range of 10-1,000 ppm.

According to the present disclosure, a volume space velocity of the organic volatile gas is 4,000-40,000 h⁻¹.

The present disclosure will be described in detail below with reference to examples.

In the following examples and comparative examples:
(1) A crystalline structure of the prepared catalyst for catalytic degradation of ethylene was measured by XRD analysis using D8 ADVANCE manufactured by Bruker in Germany, and a testing and scanning rate was within a range of 0.5°/min to 5°/min.
(2) A pore structure and a mesopore pore diameter of the prepared catalyst for catalytic degradation of ethylene were measured through an N₂ adsorption method, using ASAP 2020 physical adsorption instrument manufactured by Micromeritics in USA, and an adsorption medium was N₂.
(3) A morphology of the prepared catalyst for catalytic degradation of ethylene was measured through TEM using a transmission electron microscope with a model of JEM ARM 200F manufactured by JEOL in Japan.
(4) Electron Paramagnetic Resonance (EPR) image analysis was performed by using an electron paramagnetic resonance spectrometer.
(5) A titanium source powder was spent SCR catalyst with an average particle size of 74 µm, and a chemical composition was determined by using an XRF fluorescence analysis method (RIPP 117-90 Standard method), and results were shown in Table 1. Ingredients of the catalyst and contents thereof were also measured by the XRF fluorescence analysis method.

**Table 1**

| | Al₂O₃ | SiO₂ | TiO₂ | Fe₂O₃ | FeO | K₂O | Na₂O | MnO | MgO | Other impurities |
|---|---|---|---|---|---|---|---|---|---|---|
| Ingredients (wt%) | 1.23 | 3.55 | 46.8 | 3.05 | 35.75 | 0.134 | 0.5638 | 0.64 | 4.52 | 3.762 |

### Example 1

(1) Spent SCR catalyst (with a particle size of 120 µm) and a concentrated sulfuric acid (with a concentration of 90 wt%) were blended according to a mass ratio of 1:1.8 to obtain a mixture; and the mixture was subjected to roasting at a temperature of 180°C for 1 h.
(2) A product obtained from roasting was subjected to water leaching at a temperature of 100°C for 100 min according to a mass ratio of 1:4 between the product and water, and the mixture was subjected to a solid-liquid separation to obtain a Ti-containing filtrate.
(3) The filtrate was subjected to hydrolysis and aging in sequence, under hydrolysis conditions comprising a hydrolysis temperature of 100°C and a hydrolysis time of 3 h, and aging conditions comprising an aging temperature of 25°C and an aging time of 20 h, and an obtained solid phase product was analyzed to be a metatitanic acid colloid comprising auxiliary agent, wherein the auxiliary agent contained Na₂O and K₂O.
(4) The metatitanic acid colloid was subjected to water washing, the solid obtained from separation was subjected to drying at 80°C for 60 min, heating at a temperature rise rate of 7°C/min and finally subjected to calcination in a muffle furnace at 500°C for 6 h, so as to obtain a nano-TiO₂ powder; upon analysis, a particle size of the nano-TiO₂ powder was about 30 nm, and the crystalline form of the nano-TiO₂ powder was anatase type.
(5) The nano-TiO₂ powder was subjected to hydrogenation in a tube furnace under a pressure of 0.1 MPa, a hydrogen concentration of 100 vol%, a hydrogen flow rate of 120 mL/min, and a hydrogenation temperature rise rate of 10°C/min, so as to reach a hydrogenation temperature of 420°C, the hydrogenation with thermal insulation was performed for 12 h, and then the temperature was cooled to room temperature, and the catalyst for catalytic degradation of ethylene was prepared and denoted as T-1.

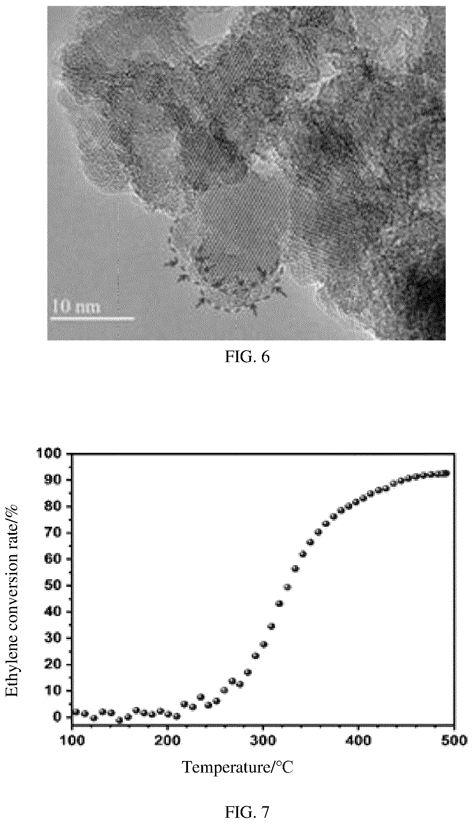

The obtained catalyst for catalytic degradation of ethylene was subjected to XRD analysis, the catalyst for catalytic degradation of ethylene comprised TiO₂ in crystalline form with the crystalline form of the anatase type; As can be seen from the TEM image of FIG. 6, the catalyst comprised a TiO₂ disordered layer having a thickness of 2.74 nm, wherein a molar percentage of Ti³⁺ was 6.73%. The catalyst further comprised K₂O and Na₂O, and ingredients were shown in Table 2.

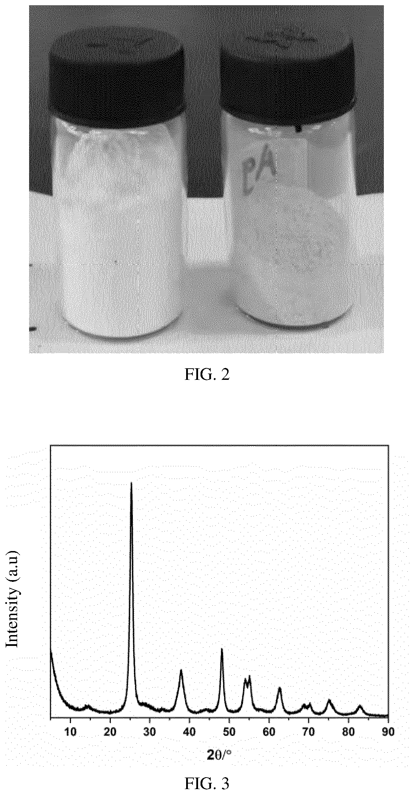

FIG. 2 shows a comparison of the appearance between the catalyst for catalytic degradation of ethylene prepared in Example 1 of the present disclosure and a TiO₂ powder; As can be seen from the figure, the TiO₂ powder was a white powder, while the catalyst for catalytic degradation of ethylene of the present disclosure had an appearance of earth yellow color and a morphology of a spherical shape.

FIG. 3 shows a comparison of the X-ray diffraction pattern between the catalyst for catalytic degradation of ethylene prepared in Example 1 of the present disclosure and a TiO₂ powder; As can be seen from FIG. 3, all the diffraction peaks of the catalyst for catalytic degradation of ethylene of the present disclosure coincided with those of the TiO₂ powder, there was no impurities, the result was consistent with the XRD spectrum of the mesoporous TiO₂ reported by the literatures. In addition, the XRD diffraction peaks of the catalyst for catalytic degradation of ethylene were obviously broader and lower, indicating minor modification of the crystallite size and structure of the microcrystal, the reasons resided in that the trivalent titanium and oxygen vacancies were generated during the hydrogenation and reduction process.

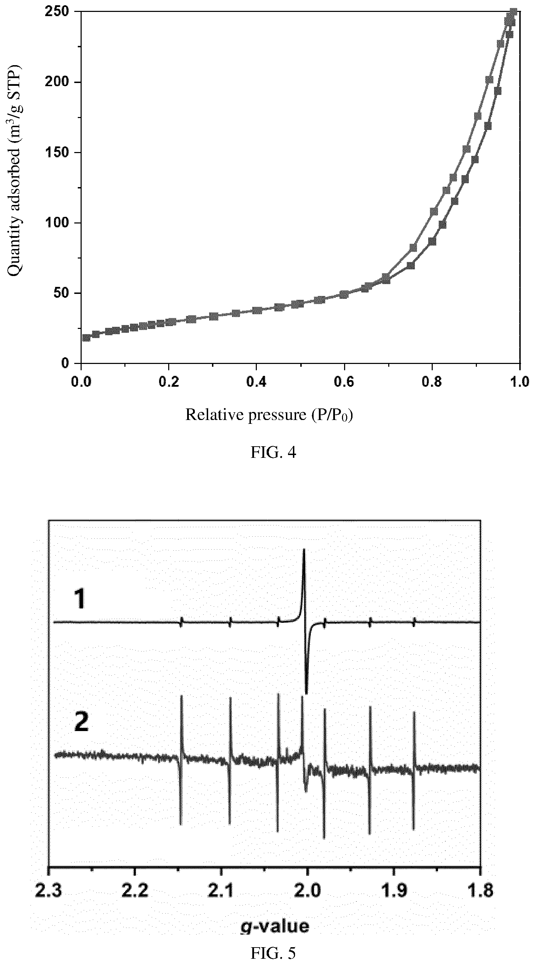

FIG. 4 is a comparison graph of nitrogen adsorption-desorption isotherms of the catalyst for catalytic degradation of ethylene prepared in Example 1 of the present disclosure, there were two curves, wherein one was an adsorption curve, another was desorption curve; FIG. 4 shows that the catalyst for catalytic degradation of ethylene of the present disclosure was Langmuir IV type and belonged to the typical adsorption curves for the mesoporous substances, i.e. a large hysteresis loop was present along with an increase of the partial pressure of adsorption. In addition, the relative pressure p/p₀ value corresponding to the point at which the adsorption capacity increases dramatically in the adsorption isotherm indicated the pore size of the sample, and as can be seen from the pore size distribution in FIG. 4 that the catalyst for catalytic degradation of ethylene of the present disclosure had highly ordered mesoporous structure, uniform pore size distribution and ordered channels.

FIG. 5 shows a comparison of the EPR between the catalyst for catalytic degradation of ethylene prepared in Example 1 of the present disclosure and TiO₂ powder; signal peaks at a g-value less than 2 were signal peaks of oxygen vacancies (Vo*) Ti³⁺; As can be seen from FIG. 5, 1 represented the TiO₂ powder, 2 represented the catalyst for catalytic degradation of ethylene of the present disclosure, and there were many signals peaks of oxygen vacancies (Vo*) Ti³⁺ produced after hydrogenation, indicating that the hydrogenation caused more oxygen vacancies generated on the surface of the material, which was more conducive to proceeding of the denitration reaction.

FIG. 6 is a TEM image of the catalyst for catalytic degradation of ethylene prepared in Example 1 of the present disclosure; As can be seen from FIG. 6 (multiple dotted lines and arrows were marked below the middle part): edges of the TiO₂ crystal nucleus appear to be etched, forming a thin disordered layer, further indicating that TiO₂ was successfully hydrogenated.

FIG. 7 is a graph showing the reaction activity of the catalyst for catalytic degradation of ethylene prepared in Example 1 of the present disclosure; As can be seen from FIG. 7, the catalyst for catalytic degradation of ethylene had an ethylene degradation activity greater than 50% at a temperature of 325-500°C, and the catalyst for catalytic degradation of ethylene had an ethylene degradation activity greater than 90% at a temperature higher than 450°C.

### Example 2

(1) Spent SCR catalyst (with a particle size of 50 µm) and a concentrated sulfuric acid (with a concentration of 88 wt%) were blended according to a mass ratio of 1: 1.5 to obtain a mixture; and the mixture was subjected to roasting at a temperature of 150°C for 0.5 h.
(2) A product obtained from roasting was subjected to water leaching at a temperature of 90°C for 80 min according to a mass ratio of 1: 3 between the product and water, and then, the mixture was subjected to a solid-liquid separation to obtain a Ti-containing filtrate.
(3) The filtrate was subjected to hydrolysis and aging in sequence, under hydrolysis conditions comprising a hydrolysis temperature of 85°C and a hydrolysis time of 2.5 h, and aging conditions comprising an aging temperature of 20°C and an aging time of 16 h, and an obtained solid phase product was analyzed to be a metatitanic acid colloid comprising auxiliary agent, wherein the auxiliary agent contained Na₂O and K₂O.
(4) The metatitanic acid colloid was subjected to water washing, the solid obtained from separation was subjected to drying at 95°C for 120 min, heating at a temperature rise rate of 5°C/min and finally subjected to calcination in a muffle furnace at 600°C for 5 h, so as to obtain a nano-TiO₂ powder; upon analysis, a particle size of the nano-TiO₂ powder was about 20 nm, and the crystalline form the nano-TiO₂ powder was anatase type.
(5) The nano-TiO₂ powder was subjected to hydrogenation in a tube furnace under a pressure of 0.1 MPa, a hydrogen concentration of 100 vol%, a hydrogen flow rate of 100 mL/min, and a hydrogenation temperature rise rate of 5°C/min, so as to reach a hydrogenation temperature of 430°C, the hydrogenation with thermal insulation was performed for 4 h, and then the temperature was cooled to room temperature, and the catalyst for catalytic degradation of ethylene was prepared and denoted as T-2.

The catalyst T-2 was analyzed and results were shown in Table 2. Comparisons of appearance, XRD, nitrogen adsorption-desorption isotherm, EPR, TEM were performed, and results obtained from the photographs or curves or spectrograms were similar to those obtained in Example 1.

### Example 3

(1) Spent SCR catalyst (with a particle size of 200 µm) and a concentrated sulfuric acid (with a concentration of 91 wt%) were blended according to a mass ratio of 1: 2 to obtain a mixture; and the mixture was subjected to roasting at a temperature of 300°C for 1.5 h.
(2) A product obtained from roasting was subjected to water leaching at a temperature of 80°C for 120 min according to a mass ratio of 1: 5 between the product and water, and the mixture was subjected to a solid-liquid separation to obtain a Ti-containing filtrate.
(3) The filtrate was subjected to hydrolysis and aging in sequence, under hydrolysis conditions comprising a hydrolysis temperature of 105°C and a hydrolysis time of 4 h, and aging conditions comprising an aging temperature of 35°C and an aging time of 26 h, and an obtained solid phase product was analyzed to be a metatitanic acid colloid comprising auxiliary agent, wherein the auxiliary agent contained Na₂O and K₂O.
(4) The metatitanic acid colloid was subjected to water washing, the solid obtained from separation was subjected to drying at 65°C for 100 min, heating at a temperature rise rate of 6°C/min and finally subjected to calcination in a muffle furnace at 550°C for 5 h, so as to obtain a nano-TiO₂ powder; upon analysis, a particle size of the nano-TiO₂ powder was about 40 nm, and the crystalline form of the nano-TiO₂ powder was anatase type.
(5) The nano-TiO₂ powder was subjected to hydrogenation in a tube furnace under a pressure of 0.1 MPa, a hydrogen concentration of 100 vol%, a hydrogen flow rate of 150 mL/min, and a hydrogenation temperature rise rate of 8°C/min, so as to reach a hydrogenation temperature of 460°C, the hydrogenation with thermal insulation was performed for 9 h, and then the temperature was cooled to room temperature, and the catalyst for catalytic degradation of ethylene was prepared and denoted as T-3.

The catalyst T-3 was analyzed and results were shown in Table 2. Comparisons of appearance, XRD, nitrogen adsorption-desorption isotherm, EPR, TEM were performed, and results obtained from the photographs or curves or spectrograms were similar to those obtained in Example 1.

### Example 4

The catalyst was prepared according to the same method as that of Example 1, except that "hydrogenation temperature of 400°C" was used to replace "hydrogenation temperature of 420°C". The prepared catalyst for catalytic degradation of ethylene was denoted as T-4.

The catalyst T-4 was analyzed and results were shown in Table 2. Comparisons of appearance, XRD, nitrogen adsorption-desorption isotherm, EPR, TEM were performed, and results obtained from the photographs or curves or spectrograms were similar to those obtained in Example 1.

### Example 5

The catalyst was prepared according to the same method as that of Example 1, except that "hydrogenation time of 2 h" was used to replace "hydrogenation time of 12 h". The prepared catalyst for catalytic degradation of ethylene was denoted as T-5.

The catalyst T-5 was analyzed and results were shown in Table 2. Comparisons of appearance, XRD, nitrogen adsorption-desorption isotherm, EPR, TEM were performed, and results obtained from the photographs or curves or spectrograms were similar to those obtained in Example 1.

### Comparative Example 1

Commercially available TiO₂ was used, and parameters of this catalyst were shown in Table 2.

### Comparative Example 2

The catalyst was prepared according to the same method as that of Example 1, except that "hydrogen concentration of 50 vol%" was used to replace "hydrogen concentration of 100 vol%". Parameters of the prepared catalyst were shown in Table 2.

### Comparative Example 3

The catalyst was prepared according to the same method as that of Example 1, except that "hydrogenation time of 0.5 h" was used to replace "hydrogenation time of 12 h", "hydrogenation temperature of 200°C" was used to replace "hydrogenation temperature of 420°C". Parameters of the prepared catalyst were shown in Table 2.

**Table 2**

| Number | Content of ingredients (wt%) | | | Thickness of disordered layer (nm) | Ti³⁺/Ti (mol%) |
|---|---|---|---|---|---|
| | TiO₂ | K₂O | Na₂O | | |
| Example 1 | 99.99 | 0.004 | 0.006 | 2.49 | 6.89 |
| Example 2 | 99.92 | 0.006 | 0.094 | 2.36 | 8.16 |
| Example 3 | 99.96 | 0.003 | 0.037 | 2.45 | 7.58 |
| Example 4 | 99.90 | 0.002 | 0.098 | 1.87 | 3.58 |
| Example 5 | 99.93 | 0.003 | 0.067 | 2.09 | 4.13 |
| Comparative Example 1 | 100 | -- | -- | -- | -- |
| Comparative Example 2 | 99.95 | 0.004 | 0.046 | 0.03 | -- |
| Comparative Example 3 | 99.92 | 0.005 | 0.075 | 0.01 | -- |

As can be seen from the results of Table 2, TiO₂ without impurities was used for hydrogenation in Comparative Example 1, the hydrogen gas at a low concentration was used for hydrogenation in Comparative Example 2, and the hydrogenation was performed in Comparative Example 3 by using the conditions that neither the hydrogenation time nor the hydrogenation temperature were within the scopes defined in the present disclosure. The results indicated that the catalysts for catalytic degradation of ethylene prepared in Examples 1-5 by using the preparation method of the present disclosure had a specific thickness of disordered layer, and a molar percentage of Ti³⁺ when accounted for titanium element.

### Application Example

The catalysts prepared in Examples 1-5 and Comparative Examples 1-3 were applied in ethylene degradation reactions, in the organic volatile gas undergoing catalytic oxidation decomposition, the ethylene had a volume concentration of 700 ppm, for other gases, the content of O₂ was 10 v%, N₂ was a balance gas, a total flow rate was 1,000 mL/min, and a volume space velocity of the organic volatile gas was 100,000 h⁻¹. Results were shown in Table 3. Degradation efficiency % = (ethylene concentration at inlet - ethylene concentration at outlet) /ethylene concentration at inlet × 100%.

**Table 3**

| | Degradation efficiency (%) | | | | | | | |
|---|---|---|---|---|---|---|---|---|
| | 100°C | 150°C | 200°C | 250°C | 300°C | 350°C | 400°C | 450°C |
| Example 1 | 0 | 0 | 2.5 | 12.5 | 20.3 | 66.3 | 84.1 | 92.7 |
| Example 2 | 1.2 | 1.3 | 2.6 | 13.6 | 21.6 | 65.4 | 82.6 | 90.2 |
| Example 3 | 0.6 | 0.8 | 2.8 | 14.4 | 22.7 | 64.2 | 83.0 | 92.7 |
| Example 4 | 0.5 | 0.2 | 2.3 | 13.7 | 25.8 | 68.2 | 80.4 | 91.4 |
| Example 5 | 0.1 | 0.5 | 2.4 | 10.7 | 24.8 | 63.7 | 81.5 | 92.3 |
| Comparative Example 1 | 0 | 0 | 0 | 0 | 0 | 0 | 0 | 0 |
| Comparative Example 2 | 0 | 0 | 1.0 | 5.0 | 14.2 | 45.3 | 56.3 | 66.7 |
| Comparative Example 3 | 0 | 0.1 | 1.6 | 6.8 | 8.4 | 31.3 | 43.4 | 64.0 |

As can be seen from the results of Table 3, the use of the titanium oxide of Comparative example 1, which has not been hydrogenated, has no degradation efficiency for ethylene; the hydrogenation time, temperature and hydrogen concentration in the Comparative Examples 2 and 3 are not within the ranges, and the obtained catalysts do not have the structure of the catalysts of the present disclosure, and the catalytic degradation effect of ethylene is inferior to that of the catalysts provided in Examples 1 to 5 of the present disclosure. In addition, the titanium oxide of Comparative example 1 is subjected to calcination under the conditions of the step (4) in Example 1 to obtain anatase-type crystal, and was hydrogenated according to the method of the step (5) in Example 1, but the prepared catalyst does not contain the auxiliary agent K₂O and Na₂O, and cannot possess a disordered layer with a thickness as defined in the present disclosure and a molar percentage of Ti³⁺, thus cannot produce good catalytic degradation effect of ethylene.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. A catalyst for catalytic degradation of ethylene, wherein the catalyst comprises TiO₂ in crystalline form and an auxiliary agent;
wherein the crystalline form of TiO₂ is anatase type, and the surface of the TiO₂ in crystalline form is covered with a TiO₂ disordered layer containing surface hydroxyl groups.

2. The catalyst according to claim 1, wherein the TiO₂ disordered layer has a thickness of 1.8-3 nm.

3. The catalyst according to claim 1 or 2, wherein in the TiO₂ disordered layer, Ti³⁺ accounts for 2.15%-10.37% of titanium element in molar percentage, preferably 5.15%-8.66%.

4. The catalyst according to any one of claims 1 to 3, wherein the catalyst comprises TiO₂ in an amount of 99.9-99.99 wt%, based on a total weight of the catalyst;
preferably, the auxiliary agent comprises K₂O and Na₂O; and
preferably, the catalyst comprises K₂O in an amount of 0.002-0.006 wt% and Na₂O in an amount of 0.006-0.098 wt%, based on a total weight of the catalyst.

5. A preparation method of a catalyst for catalytic degradation of ethylene, comprising the following steps:
(1) mixing a titanium source powder with an acid, and roasting an obtained mixture;
(2) subjecting a product obtained from the roasting to water leaching, and subsequently to a solid-liquid separation to obtain a Ti-containing filtrate;
(3) subjecting the filtrate to hydrolysis and aging to obtain a metatitanic acid colloid comprising auxiliary agent elements which contain Na and K;
(4) subjecting the metatitanic acid colloid to water washing, drying and calcination, to obtain a nano-TiO₂ powder; and
(5) subjecting the nano-TiO₂ powder to hydrogenation to obtain the catalyst for catalytic degradation of ethylene;
wherein the titanium source powder is selected from spent SCR denitration catalyst containing Na₂O and K₂O.

6. The method according to claim 5, wherein the acid is concentrated sulfuric acid, preferably, the acid has a concentration of 85-92 wt%;
preferably, the conditions for mixing comprise a temperature of 20-30°C and a time of 2-6 h;
preferably, a mass ratio of the titanium source powder to the acid is 1: (1.5-2);
preferably, a roasting temperature is within a range of 150-300°C and a roasting time is 30-90 min; and
preferably, the titanium source powder has an average particle size of 10-1,000 µm.

7. The method according to claim 5 or 6, wherein conditions for water leaching comprise a temperature of 60-120°C and a time of 60-180 min;
preferably, a mass ratio of the product to water used in the water leaching is 1: (2-6).

8. The method according to any one of claims 5 to 7, wherein a hydrolysis temperature is within a range of 80-110°C, preferably 85-105°C; and a hydrolysis time is within a range of 2-5 h, preferably 2.5-4 h;
preferably, an aging time is within a range of 15-30 h, more preferably 16-26 h, and an aging temperature is within a range of 10-50°C, more preferably 20-35°C.

9. The method according to any one of claims 5 to 8, wherein a drying temperature is within a range of 65-95°C and a drying time is 60-120 min;
preferably, a calcination temperature is within a range of 450-700°C, a calcination time is 2-8 h, and a temperature rise rate is 5-10°C/min.

10. The method according to any one of claims 5 to 9, wherein conditions for hydrogenation comprise a hydrogenation temperature of 400-550°C, a hydrogenation temperature rise rate of 5-10°C/min, a hydrogenation time of 2-12 h, a hydrogen concentration of 90-100 vol%, and a hydrogen flow rate of 100-300 mL/min

11. A catalyst for catalytic degradation of ethylene prepared by the method according to any one of claims 5 to 10.

12. A use of the catalyst according to any one of claims 1-4 and 11 in catalytic degradation of ethylene.
